# DEMANDE DE BREVET EUROPEEN

(11) **EP 0 799 776 A1**
(43) Date de publication de la demande: **08.10.1997**
(21) Numéro de dépôt: 97400697.5
(22) Date de dépôt: 27.03.1997
(51) Int. Cl.: B65G 1/04

(54) **Magasin de stockage**

(30) Priorité: 05.04.1996 FR 9604343
(71) Demandeur: GEC ALSTHOM SYSTEMES ET SERVICES SA, 75116 Paris (FR)
(72) Inventeur: Gernez, Alain, 45100 Orleans (FR)
(74) Mandataire: Gosse, Michel

(57) **Abrégé**

1/ Magasin de stockage pour des objets, comportant une pluralité de plateaux circulaires (1) horizontaux superposés coaxialement, l'ensemble formant une tour, des moyens pour supporter lesdits plateaux, chaque plateau étant libre en rotation et comportant une saignée, des moyens comprenant un organe de préhension (27) permettant audit organe de préhension de circuler dans le couloir formé par lesdites saignées lorsque les plateaux sont dans une position où les saignées sont alignées verticalement, caractérisé en ce que chaque plateau est divisé en alvéoles de stockage (2), chaque objet à stocker étant disposé dans un dit alvéole, ladite saignée des plateaux étant rectiligne, lesdits moyens permettant audit organe de préhension de circuler dans ledit couloir comprenant une colonne verticale (10) disposée à côté de ladite tour, ladite colonne étant équipée d'un chariot (11) et comportant des moyens moteurs (14, 16) de déplacement du chariot (11) le long de la colonne (10), le chariot portant un bras (20) supportant un coulisseau (21) équipé dudit organe de préhension (27), ledit bras (20) comportant des moyens moteurs (23, 25) de déplacement dudit coulisseau (21) le long du bras (20), en ce que chaque plateau (1) est pourvu de moyens passifs d'entraînement (29) coopérant avec des moyens complémentaires moteurs (31) portés par ledit chariot (11) permettant l'entraînement en rotation des plateaux (1), lesdits moyens complémentaires moteurs étant débrayables desdits moyens passifs (29), ledit bras (20) avec son coulisseau (21) circulant librement dans ledit couloir, avec ledit organe de préhension (27) et l'objet transporté.

## Description

La présente invention concerne un magasin de stockage.

En particulier, l'invention s'applique au stockage automatique de multiples références de petits objets, chaque objet étant accessible individuellement, et elle vise à obtenir une grande compacité de stockage avec un rapport du volume des objets stockés au volume total du magasin élevé, de l'ordre de 0,55 contre un rapport qui, actuellement, n'est pas supérieur à 0,35 dans des magasins connus par exemple du type à cylindre vertical dont la paroi intérieure est tapissée d'alvéoles de stockage desservis par un bras se déplaçant dans le cylindre intérieur, ou du type comportant une superposition de carrousels horizontaux à axe de rotation horizontal desservis en bout par un micro-transtockeur.

Le document DE-A 2 421 387 décrit un dispositif de stockage d'objets comprenant une colonne centrale fixe portant à son extrémité supérieure un bras fixe le long duquel peut se déplacer un chariot auquel est suspendu un moyen de préhension. Le moyen de préhension peut se déplacer horizontalement le long du bras et verticalement le long des saignées en forme de secteur circulaire de chaque plateau superposé. Des objets sont représentés sur les plateaux et un objet est représenté sur le convoyeur d'amenée situé en bas de la tour. Les plateaux sont libres en rotation.

Cette disposition assure une bonne capacité de stockage, cependant elle nécessite une grande quantité de moteurs d'entraînement en rotation des plateaux. Ces moteurs ne sont d'ailleurs pas évoqués ni représentés. La précision de prise et de dépose des objets n'est pas non plus assurée.

La présente invention a pour but d'améliorer un magasin de ce style en forme de tour circulaire à plateaux superposés et elle a pour objet un magasin de stockage pour des objets, comportant une pluralité de plateaux circulaires horizontaux superposés coaxialement, l'ensemble formant une tour, des moyens pour supporter lesdits plateaux, chaque plateau étant libre en rotation et comportant une saignée, des moyens comprenant un organe de préhension permettant audit organe de préhension de circuler dans le couloir formé par lesdites saignées lorsque les plateaux sont dans une position où les saignées sont alignées verticalement, caractérisé en ce que chaque plateau est divisé en alvéoles de stockage, chaque objet à stocker étant disposé dans un dit alvéole, ladite saignée des plateaux étant rectiligne, lesdits moyens permettant audit organe de préhension de circuler dans ledit couloir comprenant une colonne verticale disposée à côté de ladite tour, ladite colonne étant équipée d'un chariot et comportant des moyens moteurs de déplacement du chariot le long de la colonne, le chariot portant un bras supportant un coulisseau équipé dudit organe de préhension, ledit bras comportant des moyens moteurs de déplacement dudit coulisseau le long du bras, en ce que chaque plateau est pourvu de moyens passifs d'entraînement coopérant avec des moyens complémentaires moteurs portés par ledit chariot permettant l'entraînement en rotation des plateaux, lesdits moyens complémentaires moteurs étant débrayables desdits moyens passifs, ledit bras avec son coulisseau circulant librement dans ledit couloir, avec ledit organe de préhension et l'objet transporté.

D'autres caractéristiques ressortiront de la description d'un exemple particulier de mise en oeuvre de l'invention, faite ci-après en référence au dessin annexé dans lequel :

La figure 1 est une vue schématique générale en perspective d'un magasin de stockage selon l'invention.

La figure 2 est une vue schématique dépouillée, en perspective, montrant seulement un plateau avec ses alvéoles de stockage et son supportage.

Les figures 3A et 3B montrent, selon deux vues schématiques de dessus, un plateau selon deux positions angulaires distinctes.

La figure 4 est une vue schématique agrandie de l'ensemble, séparé, du système permettant la manipulation des objets pour les déposer ou les prendre dans les alvéoles des différents plateaux du magasin.

La figure 5 est une vue montrant le montage du magasin : on voit un plateau centré et un plateau en cours d'introduction.

La figure 6A est une vue semblable à la figure 3A, mais dans une variante où il existe, pour chaque plateau, un organe immobilisateur du plateau qui est actionné dans le sens de la non immobilisation du plateau lorsque les moyens d'entraînement en rotation du plateau sont en position embrayés, ce qui est le cas de cette figure 6A.

La figure 6B montre la position où les moyens d'entraînement du plateau sont débrayés. Dans cette position, l'organe immobilisateur est rappelé en position d'immobilisation du plateau.

La figure 7 est semblable à la figure 1 et montre seulement l'ensemble du magasin de stockage dans le cas où il comporte la variante d'immobilisation des plateaux. pour la clarté du dessin, un seul organe d'immobilisation a été représenté : celui pour le plateau supérieur. En réalité, il y a un organe immobilisateur pour chaque plateau.

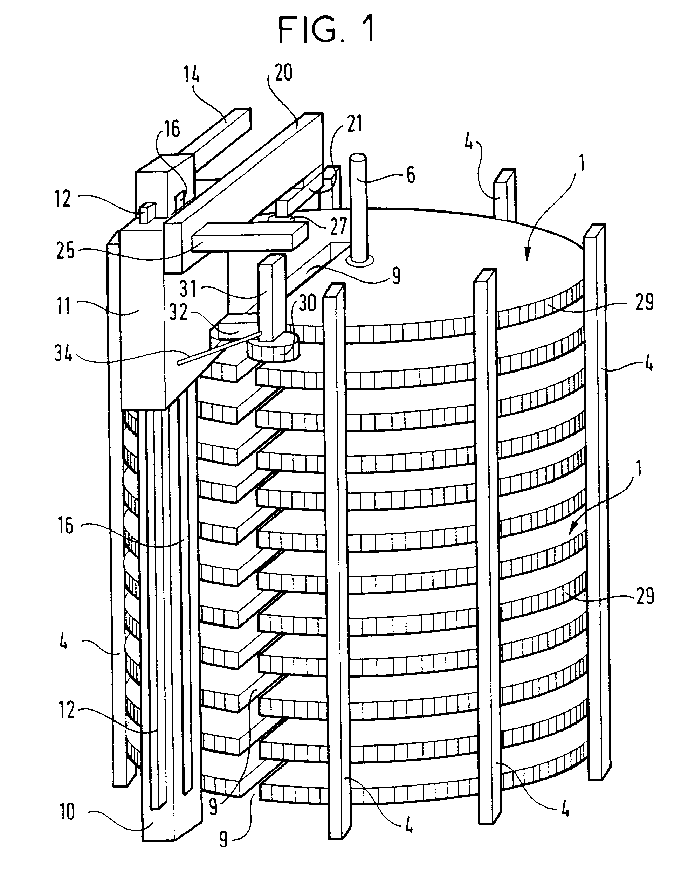

En se reportant aux figures 1, 2 et 4, on va maintenant décrire l'ensemble du magasin.

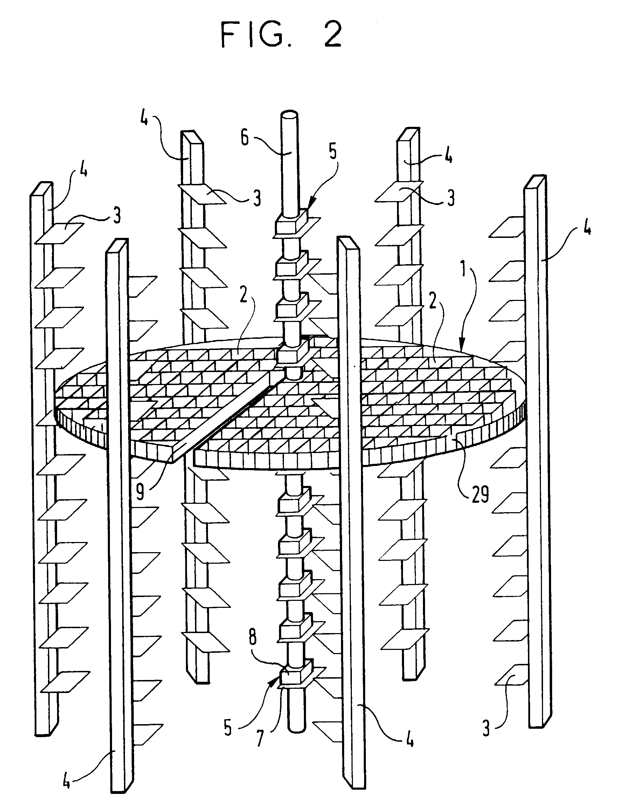

Celui-ci se présente sous la forme d'une tour constituée par la superposition d'une pluralité de plateaux circulaires 1. Chaque plateau 1 est divisé en une grande quantité d'alvéoles de stockage 2, non représentés sur la figure 1, mais visibles sur la figure 2.

Les plateaux 1 sont disposés horizontalement et superposés coaxialement. Ils sont supportés périphériquement par des taquets supports 3 montés sur des poteaux périphériques 4 et au centre par des supports rotatifs 5 (figure 2) montés libres en rotation sur un poteau central 6. Les supports rotatifs 5 comportent une portion plane 7 d'appui proprement dit et une portion parallélépipédique 8 fixant le centrage de chaque plateau par rapport au poteau central 6. Les taquets supports 3 sont en matériau antifriction ou recouverts d'un tel matériau.

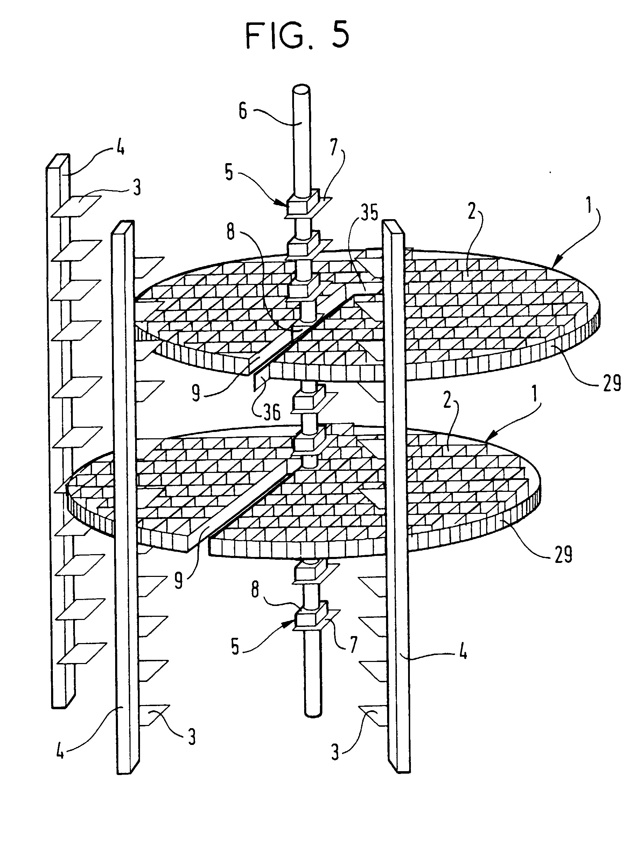

Chaque plateau 1 comprend une saignée rectiligne 9, exempte d'alvéoles 2, dont le rôle sera explicité plus loin. Par ailleurs, c'est par cette saignée que les plateaux sont introduits et centrés sur le poteau central 6 comme on le verra plus loin en référence à la figure 5. De préférence, les taquets supports 3 sont plus larges que la largeur de la saignée 9 des plateaux. En outre, la largeur de la saignée 9 est supérieure à la largeur maximale des objets à manutentionner. On entend par "objet", l'objet avec son conditionnement, si un tel conditionnement est nécessaire, c'est-à-dire, par exemple, sa boîte. Ainsi les "objets" sont stockés chacun dans un alvéole 2. La dimension, en vue de dessus des alvéoles correspond à celle des objets, au jeu près pour permettre leur introduction. En revanche, la profondeur des alvéoles, c'est-à-dire l'épaisseur des plateaux 1 est inférieure à celle des objets, c'est-à-dire que ceux-ci dépassent largement l'épaisseur des plateaux. C'est pour cette raison que sur la figure 1 les plateaux ne sont pas jointifs. Il est seulement nécessaire que les objets ne touchent pas le fond du plateau situé juste au-dessus de celui dans un alvéole duquel il est placé de façon à permettre la libre rotation des plateaux les uns par rapport aux autres.

Sur la figure 1, les différents plateaux sont tous orientés angulairement de telle façon que les saignées 9 sont toutes alignées verticalement, formant un couloir.

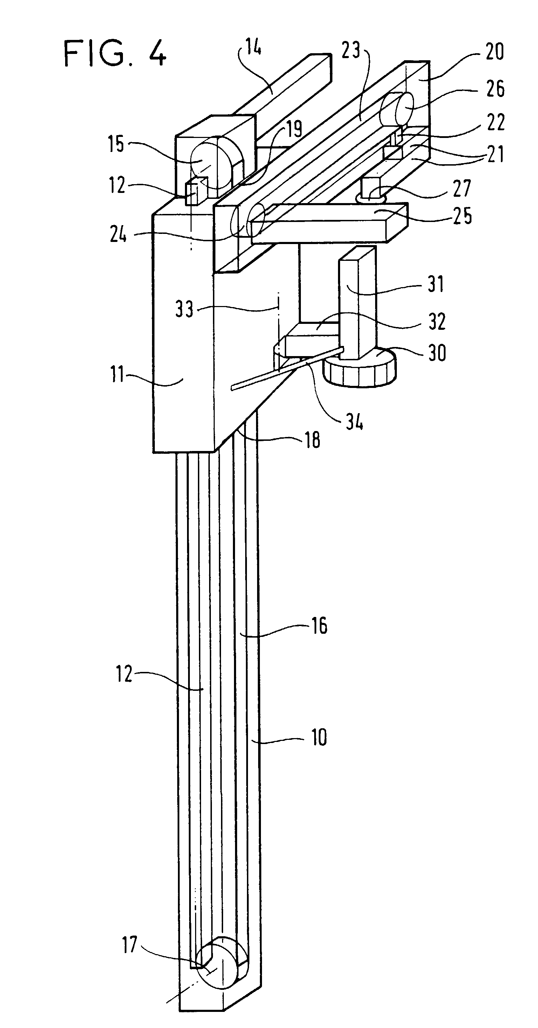

A côté de la tour ainsi formée, est disposé un système de manutention assurant la dépose et la prise des objets dans les alvéoles 2 des plateaux 1 du magasin. Ce système visible sur la figure 1 est représenté séparément et d'une façon agrandie figure 4.

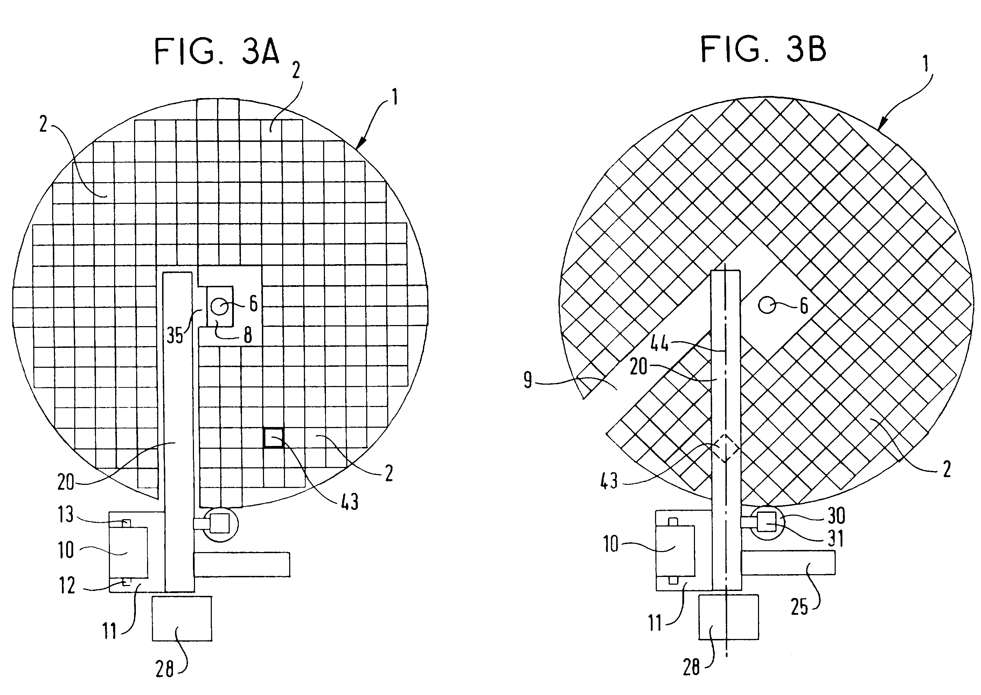

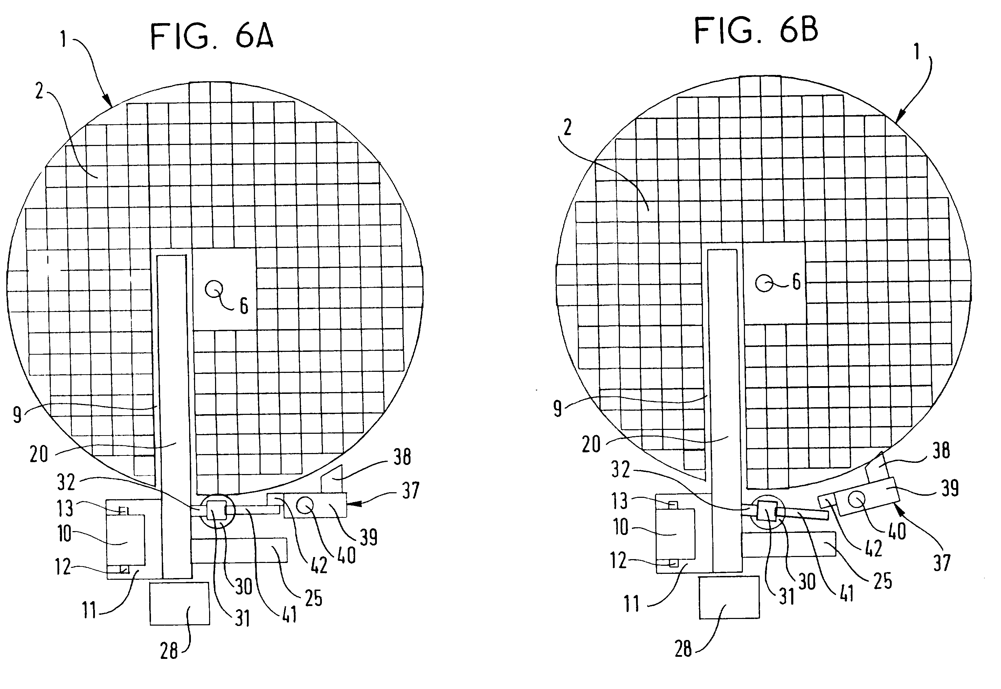

Il comprend une colonne verticale 10. Sur cette colonne est monté un chariot 11 guidé le long de la colonne par deux règles 12, 13 (la règle 13 n'est visible que sur les figures 3A, 3B, 6A et 6B). Le chariot 11 peut se déplacer le long de la colonne 10 par le moyen d'un moteur 14 portant une poulie motrice 15 recevant une courroie crantée 16 passant en outre sur une poulie de renvoi 17 située à l'extrémité inférieure de la colonne 10 et dont deux extrémités 18, 19 sont fixées au chariot 11.

Au chariot 11 est fixé un bras 20 supportant et guidant un coulisseau 21 fixé par une pièce 22 à une courroie crantée 23 tendue entre une poulie motrice 24 entraînée par un moteur 25 et une poulie de renvoi 26. Le coulisseau 21 est équipé d'un organe de préhension 27 tel qu'une ventouse par exemple. Ainsi, le coulisseau peut parcourir horizontalement le bras 20. Comme cela est visible sur la figure 4, le coulisseau 21 est fixé, par la pièce 22 à la courroie 23, à la partie arrière du coulisseau, de telle sorte que lorsque celui-ci est situé en partie avant du bras 6, le coulisseau, avec son organe de préhension 27, dépasse nettement le chariot 11 permettant ainsi la prise et la dépose d'objets dans un réceptacle externe 28 visible figures 3A, 3B, 6A et 6B.

Au chariot 11 sont encore liés des moyens permettant l'entraînement en rotation des différents plateaux 1, de façon à orienter convenablement angulairement un plateau lors de la prise ou de la dépose d'un objet dans un alvéole d'un plateau. Ces moyens d'entraînement débrayables, coopèrent, dans la position embrayée, avec des moyens passifs portés par les plateaux. Dans l'exemple décrit, ces moyens passifs consistent en ce que la périphérie de chaque plateau 1 porte une courroie crantée 29.

Ces moyens moteurs d'entraînement, débrayables, portés par le chariot 11 comprennent un pignon 30, actionné par un moteur 31 lequel est lié au chariot 11 par un bras support 32 articulé au chariot autour d'un axe vertical 33. L'embrayage et le débrayage de ces moyens, sur une courroie crantée 29 d'un plateau 1, sont effectués par la rotation du bras support 32 autour de son axe 33 par le moyen d'un vérin 34 articulé entre le chariot 11 et le moteur 31 ou le bras 32. Ce vérin articulé n'est que schématisé sur les figures pour ne pas surcharger le dessin.

Le bras 20, avec son coulisseau 21 et son organe de préhension 27 peut circuler librement dans le couloir formé par les saignées 9 lorsqu'elles sont alignées comme représenté sur la figure 1.

En se reportant maintenant à la figure 5, on va montrer comment s'opèrent le montage et le démontage de la tour, ou comment on peut changer un plateau par un autre ayant, par exemple, une autre configuration de la disposition ou des dimensions des alvéoles 2.

Pour ce faire, on prévoit la démontabilité de suffisamment de poteaux 4 autour des plateaux pour permettre leur introduction ou leur extraction latéralement par la saignée 9. Les plateaux restants sont supportés en leur centre ainsi qu'à leur périphérie par les taquets supports 3 des poteaux 4 restants.

Dans l'exemple de la figure 5, il reste trois poteaux 4.

En outre, la saignée 9 de chaque plateau qui, comme on le voit bien sur les figures 1, 2, 7, 3A, 3B, 6A et 6B, n'est pas rayonnante mais passe à côté de l'axe du plateau donc du poteau central 6, comporte comme on le voit figure 5 et comme on l'a figuré également seulement sur la figure 3A une encoche centrale 35.

Ainsi, en poussant le plateau, on introduit la partie 8 d'un support rotatif 5 du poteau central 6 dans la saignée 9 du plateau puis, par poussée latérale, on vient placer cette partie 8 dans l'encoche centrale 35. L'encoche 35 est ensuite refermée par une tirette 36 accessible à la périphérie du plateau (figure 5).

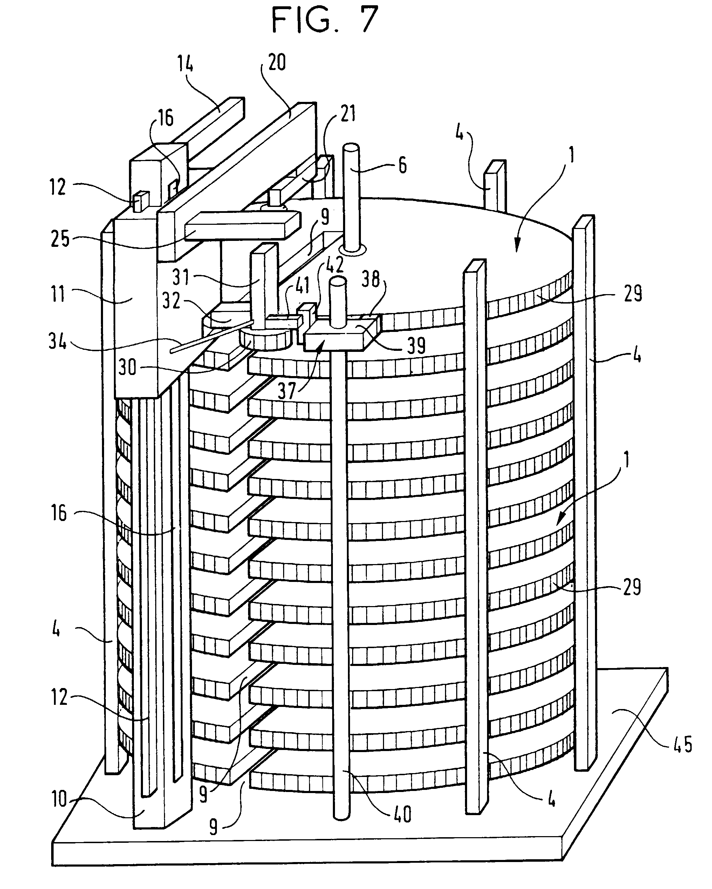

En se référant à la figure 7, ainsi qu'aux figures 6A et 6B, on va décrire un aménagement qui n'existe pas sur les autres figures : il s'agit d'un organe 37 d'immobilisation des plateaux 1 lorsque le système d'entraînement en rotation des plateaux n'est pas en position embrayée.

L'organe d'immobilisation 37 comprend un patin 38 fixé à l'extrémité d'un levier 39. Un organe d'immobilisation 37 est ainsi prévu au niveau de chaque plateau 1, cependant un seul organe a été représenté sur la figure 7 afin de ne pas l'encombrer.

Tous les organes d'immobilisation 37 sont montés sur une tige support 40. Chaque organe 37 est monté sur la tige 40 avec un ressort de rappel non représenté, tel qu'un ressort spirale, de manière qu'en l'absence de sollicitation opposée, le patin 38 de l'organe 37 coopère avec la courroie crantée 29 du plateau 1 correspondant, assurant ainsi son immobilisation. C'est la position représentée figure 6B. En revanche, lorsque le pignon 30 d'entraînement en rotation du plateau est embrayé contre la courroie crantée 29 du plateau, un bras 41, solidaire du moteur 31 et de son bras support 32 vient pousser une queue 42 du levier 39 faisant basculer l'organe 37 et libérer le plateau 1 qui peut librement tourner si le moteur 31 est mis en marche. C'est la position représentée figure 6A. Sur la figure 7, l'ensemble est fixé sur un socle 45 qui n'a pas été représenté sur la figure 1.

Le fonctionnement est le suivant :

Pour prendre un objet 43 (figure 3A) situé dans l'un des alvéoles 2 d'un plateau 1, on place le pignon 30 en position débrayée, puis on déplace le chariot 11 de façon à amener le pignon d'entraînement 30 des plateaux 1 au niveau du plateau 1 contenant l'objet 43 à prendre, puis on embraye le pignon 30 sur la courroie crantée 29 du plateau et l'on actionne le moteur 31 de façon à entraîner en rotation le plateau jusqu'à ce que l'objet 43 soit situé dans l'axe 44 du bras 20 (figure 3B).

On actionne ensuite le moteur 25 de déplacement du coulisseau 21 de manière à amener l'organe de préhension 27 (par exemple une ventouse) à la verticale de l'objet 43. On débraye le pignon 30 de la courroie crantée 29, puis on descend légèrement le chariot 11 de façon à amener la ventouse 27 au contact de l'objet 43. On effectue alors le vide dans la ventouse pour capter l'objet. On remonte le chariot jusqu'à ce que le pignon 30 revienne au niveau de la courroie crantée 29 du plateau, on embraye le pignon sur la courroie 29 et on replace le plateau dans sa position angulaire initiale (toutes les saignées 9 alignées). On débraye le pignon 30 et on amène le bras 20 un peu au dessus du réceptacle 28. On déplace alors le coulisseau 21 le long du bras 20 de manière à placer la ventouse 27 avec son objet 43 à la verticale du réceptacle 28 et on "casse" le vide dans la ventouse pour que l'objet 43 tombe dans le réceptacle.

L'entrée d'un objet dans le magasin s'effectue par une manoeuvre inverse, après l'avoir placé dans le réceptacle 28 dans une position angulaire lui permettant d'être déposé dans l'alvéole 2 qui lui est affecté.

Afin de traiter des objets de tailles différentes, les plateaux peuvent être disposés à des pas variables, dépendant de la hauteur des objets. Ceci s'opère en réglant à la hauteur adéquate les supports rotatifs 5 ainsi que les taquets supports 3.

De même, la dimension des alvéoles 2 peut être différente d'un plateau à l'autre, ainsi que sur un même plateau. Ces deux éléments : pas des plateaux et dimensions des alvéoles peuvent être modifiés dans le temps selon l'évolution de la répartition des dimensions des objets.

Selon une variante, on peut munir les poteaux périphériques 4 de roulettes de guidage des plateaux. Chaque poteau porte alors deux roulettes à axe vertical suffisamment espacées pour qu'au passage de la saignée 9 au moins une roulette porte sur le pourtour du plateau. Dans ce cas, le pourtour du plateau porte une piste de roulement à côté de la courroie crantée 29. On peut alors supprimer le poteau central 6. On peut aussi le maintenir et l'utiliser comme guide pour l'extrémité du bras 20.

Bien entendu, l'organe de préhension 27 peut, au lieu d'être une ventouse, être remplacé par une pince par exemple, coopérant avec un détail de forme du conditionnement de l'objet à manipuler.

Comme on peut le voir, le magasin selon l'invention est particulièrement compact pour un magasin avec accès individuel à chaque charge et ne nécessite de prévoir aucun espace mort, libre, autour du magasin pour la dépose ou la prise d'un objet dans le magasin, et son taux de remplissage est particulièrement élevé car le seul espace mort interne est le couloir formé par les saignées 9.

## Revendications

1. Magasin de stockage pour des objets, comportant une pluralité de plateaux circulaires (1) horizontaux superposés coaxialement, l'ensemble formant une tour, des moyens pour supporter lesdits plateaux, chaque plateau étant libre en rotation et comportant une saignée, des moyens comprenant un organe de préhension (27) permettant audit organe de préhension de circuler dans le couloir formé par lesdites saignées lorsque les plateaux sont dans une position où les saignées sont alignées verticalement, caractérisé en ce que chaque plateau est divisé en alvéoles de stockage (2), chaque objet à stocker étant disposé dans un dit alvéole, ladite saignée des plateaux étant rectiligne, lesdits moyens permettant audit organe de préhension de circuler dans ledit couloir comprenant une colonne verticale (10) disposée à côté de ladite tour, ladite colonne étant équipée d'un chariot (11) et comportant des moyens moteurs (14, 16) de déplacement du chariot (11) le long de la colonne (10), le chariot portant un bras (20) supportant un coulisseau (21) équipé dudit organe de préhension (27), ledit bras (20) comportant des moyens moteurs (23, 25) de déplacement dudit coulisseau (21) le long du bras (20), en ce que chaque plateau (1) est pourvu de moyens passifs d'entraînement (29) coopérant avec des moyens complémentaires moteurs (31) portés par ledit chariot (11) permettant l'entraînement en rotation des plateaux (1), lesdits moyens complémentaires moteurs étant débrayables desdits moyens passifs (29), ledit bras (20) avec son coulisseau (21) circulant librement dans ledit couloir, avec ledit organe de préhension (27) et l'objet transporté.

2. Magasin de stockage selon la revendication 1, caractérisé en ce que les moyens pour supporter lesdits plateaux (1) comprennent un poteau central (6) équipé de supports rotatifs (5) et des poteaux périphériques (4) munis de taquets supports (3).

3. Magasin de stockage selon l'une des revendications 1 ou 2, caractérisé en ce qu'à chaque plateau (1) est associé un organe (37) d'immobilisation du plateau, ledit organe étant un organe basculant commandé en position de non-immobilisation du plateau par un bras (41) solidaire desdits moyens complémentaires moteurs (30, 31) d'entraînement des plateaux mis en position embrayée.
